# EUROPÄISCHE PATENTSCHRIFT

(11) **EP 2 672 918 B1**
(45) Veröffentlichungstag und Bekanntmachung des Hinweises auf die Patenterteilung: **20.06.2018**
(21) Anmeldenummer: 12703112.8
(22) Anmeldetag: 08.02.2012
(51) Int. Cl.: A61C 7/14

(54) **VERFAHREN ZUR HERSTELLUNG EINES PATIENTENSPEZIFISCHEN BRACKETKÖRPERS UND ZUGEHÖRIGER BRACKETKÖRPER**
METHOD FOR PRODUCING A PATIENT-SPECIFIC BRACKET BODY, AND ASSOCIATED BRACKET BODY
PROCÉDÉ DE FABRICATION D'UN CORPS DE BAGUE ORTHODONTIQUE SPÉCIFIQUE AU PATIENT ET CORPS DE BAGUE AINSI OBTENU

(30) Priorität: 09.02.2011 DE 102011003894
(43) Veröffentlichungstag der Anmeldung: 18.12.2013
(73) Patentinhaber: DW LINGUAL SYSTEMS GMBH, 49152 Bad Essen (DE)
(72) Erfinder: VU, Hoang Viet-Ha Julius, 59425 Unna (DE); WIECHMANN, Dirk, 49152 Bad Essen (DE)
(74) Vertreter: Taruttis, Stefan Georg
(86) Internationale Anmeldenummer: PCT/EP2012/052143
(87) Internationale Veröffentlichungsnummer: WO 2012/116877

(56) Entgegenhaltungen:
- EP-A2- 1 941 842
- US-A1- 2004 175 669
- US-A1- 2010 003 632

## Beschreibung

Die Erfindung betrifft ein Verfahren zur Herstellung eines patientenspezifischen Bracketkörpers.

Für die kieferorthopädische Behandlung von Patienten mit festsitzenden Klammern werden Brackets auf die zu behandelnden Zähne des Patienten geklebt und durch einen Drahtbogen miteinander verbunden, so dass sie eine Anordnung von Brackets mit jeweils einem Schlitz bilden, durch den ein Bogendraht geführt sein kann. Die Brackets weisen eine Auflage (Pad) zur Verbindung mit dem Zahn und einen Bracketkörper auf, der insbesondere in einem Schlitz (Slot) den Drahtbogen aufnimmt.

Als Brackets können Standardbrackets verwendet werden, die nach gewissen Standardwerten normiert sind und somit für eine gewisse Bandbreite von Patienten verwendet werden können. Es gibt aber auch die Möglichkeit, Brackets individuell für Patienten herstellen zu lassen, wie bspw. in EP1474064B1, EP07111572A1, US20020010568A1 und EP08103240 offenbart.

Die US 2004/0175669 A1 beschreibt die Anpassung vorgefertigter Brackets durch computergestütztes Modellieren des Abschnitts des Brackets, der für die Anpassung an den Zahn entfernt werden muss, wobei dann dieser Abschnitt des Brackets weggeschnitten wird. Das Bracket wird dabei durch das Abtragen von Material individuell für einen Zahn angepaßt. Die dafür eingesetzten Brackets sind vorgefertigt und das Material wird vom Basisabschnitt abgetragen, um das Bracket an den individuellen Zahn anzupassen, oder kann vom Bogendraht - Abschnitt des Brackets abgetragen werden, um den Slot, der den Bogendraht aufnimmt, anzupassen. Das zu entfernende Material wird virtuell in einer dreidimensionalen Darstellung der Zähne bestimmt, auf denen dann die Brackets angeordnet werden, d.h. computergestützt.

Die EP 1941842 A2 beschreibt ein Verfahren, bei dem in einem Computer eine digitale Dentition des Patienten gespeichert ist, der Computer auf eine Bibliothek dreidimensionaler Bracketkörper zugreift, in dem Computer die Auflagenfläche des Brackets bestimmt wird, ein virtueller Bracketkörper aus der virtuellen Bibliothek entnommen wird und der virtuelle Bracketkörper in Bezug zu der virtuellen Auflagefläche positioniert wird und mit dieser kombiniert wird, um eine virtuelle vereinigte Darstellung des Brackets zu erzeugen, nach der es anschließend hergestellt wird.

Während die Herstellung von Standardbrackets keine Schwierigkeiten bereitet, ist die Herstellung von vollständig individualisierten Brackets sehr aufwändig. In einer Variante stehen in einem Computer einzelne Bracketbestandteile, wie bspw. Haken (Hook), Flügel (Wing), ein Schlitz (Slot) zur Aufnahme eines Bogendrahts und eine Auflage (Pad) zur Anordnung auf einem Zahn zur Verfügung, die dann zu einem virtuellen Bracket zusammengesetzt werden, wobei dies in einer virtuellen Zahnanordnung (Set-Up) des Gebisses eines Patienten erfolgt. Das auf diese Weise erzeugte virtuelle Bracket wird an einen 3D-Drucker übermittelt, um damit ein reales Bracket herzustellen.

Bei Standardbrackets wird als nachteilig empfunden, dass sie keine Individualisierung für einen bestimmten Patienten aufweisen. Bei vollständig individualisierten Brackets wird die aufwändige Herstellung als nachteilig empfunden.

Aufgabe der vorliegenden Erfindung ist es, auf einfache Weise einen patientenspezifischen Bracketkörper herzustellen und bevorzugt ein patientenspezifisches Bracket mit einem solchen Bracketkörper.

Die Aufgabe wird durch ein Verfahren mit den Merkmalen der Ansprüche und einen nach dem Verfahren hergestellten Bracketkörper gelöst.

### Allgemeine Beschreibung der Erfindung

Insbesondere wird der Bracketkörper mit den folgenden Verfahrensschritten hergestellt:
a) Bereitstellen eines Rohbracketkörpers, der einen Distanzabschnitt aufweist,
b) Festlegen eines ersten Parameters zum Durchtrennen des Distanzabschnitts (9d), wobei der erste Parameter einen Abstand der entstehenden Schnittfläche des Distanzabschnitts vom Schlitz festlegt, um eine geeignete Höhe des Bracketkörpers festzulegen,
c) Festlegen eines zweiten Parameters zum Durchtrennen des Distanzabschnitts, wobei der zweite Parameter einen Schneidwinkel zur mesio-distalen-Achse festlegt, um einen geeigneten Torquewert des Bracketkörpers festzulegen,
d) Festlegen eines dritten Parameters zum Durchtrennen des Distanzabschnitts (9d), wobei der dritte Parameter einen Schneidwinkel zur okklusal-gingivalen-Achse festlegt, um einen geeigneten Rotationswert des Bracketkörpers festzulegen,
e) Durchtrennen des Distanzabschnitts entsprechend der drei festgelegten Parameter. Die Schnittfläche wird zur Herstellung eines Brackets mit einer Auflage verbunden, die insbesondere eine konstante Dicke zwischen zwei ebenen Flächen aufweist.

Vorteilhaft wird der Rohbracketkörper im Schritt a) durch ein MIM- oder ein selektives Laserschmelzverfahren (Selective-Laser-Melting-Verfahren) hergestellt, wobei er mit Vorteil aus einem biokompatiblen Metall oder einer biokompatiblen Legierung, insbesondere Titan, Gold, Silber, rostfreier Stahl oder einer Kobalt-Chrom-Legierung, erzeugt bzw. bereitgestellt wird.

Das Durchtrennen im Schritt e) erfolgt bevorzugt mit Hilfe einer Säge.

In einer Variante erfolgt das Festlegen der Parameter in den Schritten b) bis d) individuell für einen Patienten.

In einer anderen Variante werden die Parameter in den Schritten b) bis d) jeweils in einem vorbestimmten Intervall mit vorbestimmten Intervallschritten variiert, um eine Bracketkörperbibliothek zu erstellen, in der Bracketkörper mit den jeweiligen verschiedenen Parameterwerten angeordnet sind.

Um ein Bracket herzustellen, wird für jeden zu behandelnden Zahn eines Patienten eine Auflage zur Verbindung mit einem Bracketkörper bereitgestellt.

Jede Auflage wird folgend mit einem Bracketkörper verbunden, insbesondere mittels Kleben oder Schweißen, um für jeden zu behandelnden Zahn eines Patienten ein Bracket herzustellen.

Anschließend werden die Brackets in einem Malokklusionsmodell des Patienten jeweils auf ihrem zugehörigen, zu behandelnden Zahn positioniert und dann wird ein Übertragungstablett erstellt. Bevorzugt sind auf dem Malokklusionsmodell, das die Dentition in Fehlstellung zeigt, die Brackets mit ihrer Auflage auf einer Zahnoberfläche angeordnet und es wird eine Masse an den Brackets angeordnet, das die Brackets in ihrer jeweiligen Stellung fixiert, die sie auf einem Zahn dieser Dentition einnehmen.

Nach dem zuvor beschriebenen Verfahren können somit sowohl Bracketkörper als auch Brackets, die einen mit einer Auflage verbundenen Bracketkörper aufweisen, patientenspezifisch individualisiert sein.

Bevorzugt wird eine Bracketkörperbibliothek von Rohbracketkörpern mit Bracketkörperbehältern zur Aufnahme von Bracketkörpern hergestellt, wobei die Bracketkörperbehälter matrixartig angeordnet sind. In den Bracketkörperbehältern sind Bracketkörper angeordnet. Die Bracketkörper sind vorteilhaft zeilenweise nach einem Parameter und spaltenweise nach einem anderen Parameter sortiert in den Bracketkörperbehältern angeordnet. Die beiden Parameter sind bevorzugt jeweils innerhalb ausgewählter Intervallgrenzen mit ausgewählten Intervallschritten variiert. Mit Vorteil ist einer der Parameter der dritte oder der zweite Parameter und der andere Parameter der zweite oder der dritte Parameter.

Der Bracketkörper weist eine durch einen Distanzabschnitt beabstandete Schnittfläche auf, die durch Durchtrennen, insbesondere Sägen erzeugt ist. Der Distanzabschnitt beabstandet die Schnittfläche vom Schlitz des Bracketkörpers und weist eine Länge auf, die als erster Parameter eine geeignete Höhe des Bracketkörpers festlegt. Die Schnittfläche ist als zweiter Parameter in einem Schneidwinkel zur mesio-distalen Achse angeordnet und legt einen geeigneten Torquewert des Bracketkörpers fest. Des Weiteren ist die Schnittfläche als dritter Parameter in einem Schneidwinkel zur okklusal-gingivalen Achse angeordnet, der einen geeigneten Rotationswert des Bracketkörpers festlegt. Die Schnittfläche ist daher durch die drei Parameter festgelegt. Durch Verbindung der Schnittfläche des Distanzabschnitts des Bracketkörpers mit der Auflage, die insbesondere eine ebene Fläche, bevorzugt eine konstante Materialdicke aufweist, wird die Anordnung des Bracketkörpers zur Auflage durch die drei Parameter festgelegt, und damit wird auch die Anordnung des Schlitzes im Bracketkörper angepasst für die drei Parameter auf der Auflage festgelegt.

### Genaue Beschreibung der Erfindung

Es zeigen:
Fig. 1 mehrere Ansichten einer Rohauflage für den Zahn 21,
Fig. 2 mehrere Ansichten einer Rohauflage für den Zahn 23,
Fig. 3 mehrere Ansichten einer Rohauflage für den Zahn 27,
Fig. 4 mehrere Ansichten einer Rohauflage für den Zahn 35,
Fig. 5 mehrere Ansichten einer Rohauflage für den Zahn 37,
Fig. 6 mehrere Ansichten eines Rohbracketkörpers für den Zahn 1 des Oberkiefers (OK 1er),
Fig. 6a mehrere Ansichten eines Bracketkörpers, hergestellt aus dem Rohbracketkörper der Fig. 6,
Fig. 7 mehrere Ansichten eines Bracketkörpers für den OK oder Zahn 6 des Unterkiefers (UK 6er),
Fig. 8 mehrere Ansichten eines Bracketkörpers für den Zahn 7 des Oberkiefers (OK) oder Unterkiefers (UK) (7er),
Fig. 8a mehrere Ansichten eines Bracketkörpers, hergestellt aus dem Rohbracketkörper der Fig. 8,
Fig. 9 eine perspektivische Ansicht eines Ziel-Set-Ups, wobei ein Bracketkörper an einem Zahn angeordnet ist und ein Spalt zwischen beiden mit Kunststoff verfüllt ist,
Fig. 10 eine perspektivische Ansicht eines Zahns, an den ein fertiges Bracket herangeführt wird,
Fig. 11 eine Draufsicht auf eine Rohauflagebibliothek und
Fig. 12 eine Draufsicht auf eine Bracketkörperbibliothek.

Zunächst werden ein Materialstreifen für Auflagen (100m lang, 5cm breit und 0,4mm dick) aus rostfreiem Stahl sowie eine Stanze mit einem Stanzstempel bereitgestellt, um mit Hilfe der Stanze Rohauflagen aus dem Auflagenmaterialstreifen auszustanzen. Die Stanze stanzt aus einem eingelegten Auflagenmaterialabschnitt des Auflagenmaterialstreifens mehrere gleiche Rohauflagen aus, wobei die bukkale/linguale Umfangskontur derselben an den Zahn angepasst ist, für den die Rohauflage hergestellt wird. Anstelle eines Auflagenmaterialstreifens ist es alternativ möglich, auch einen Auflagenmaterialbogen zu verwenden.

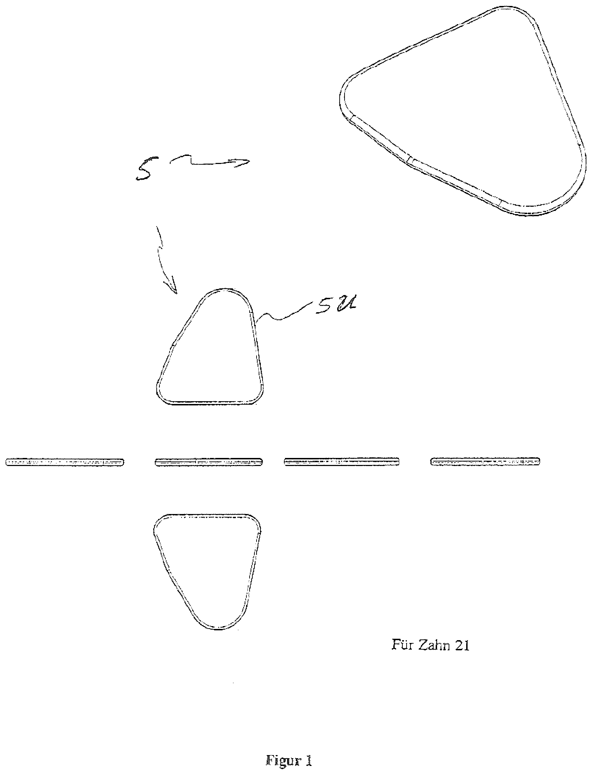

In Fig. 1 sind die sechs Seitenansichten sowie eine perspektivische Ansicht einer Rohauflage 5 für den Zahn 21 gezeigt, das auf diese Weise hergestellt wurde. Die Rohauflage 5 ist eben und weist eine konstante Materialdicke über die gesamte Fläche auf. Die bukkale/linguale Umfangskontur 5U weist nahezu die Form eines Dreiecks auf, wodurch die Rohauflage 5 gut an den Zahn 21 angepasst ist. Die beim Ausstanzen entstandenen Kanten der bukkalen/lingualen Umfangskontur 5U wurden in einem folgenden Prägeschritt beseitigt, wodurch sich die abgerundeten Seitenflächen dieser Umfangskontur 5U ergeben.

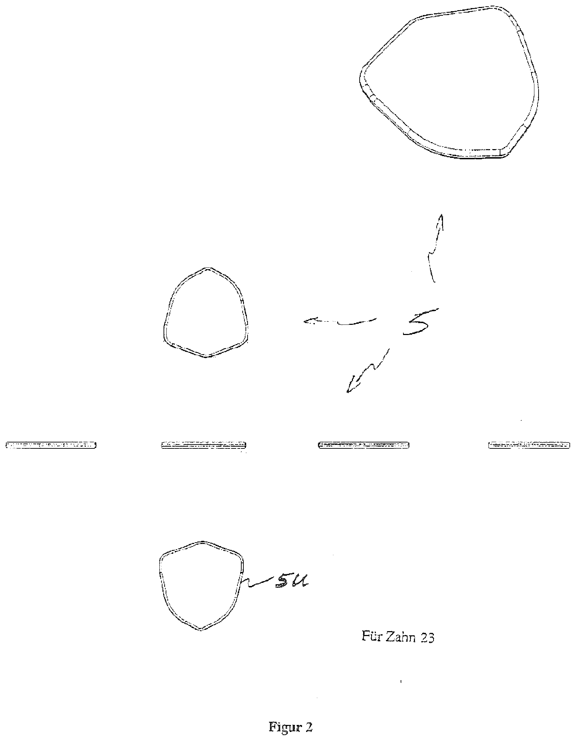

Analog zeigt die Fig. 2 eine nach demselben Verfahren hergestellte Rohauflage 5 für den Zahn 23, wobei sich diese Rohauflage 5 von der der Fig. 1 lediglich durch die andere Form der bukkalen/lingualen Umfangskontur 5U unterscheidet.

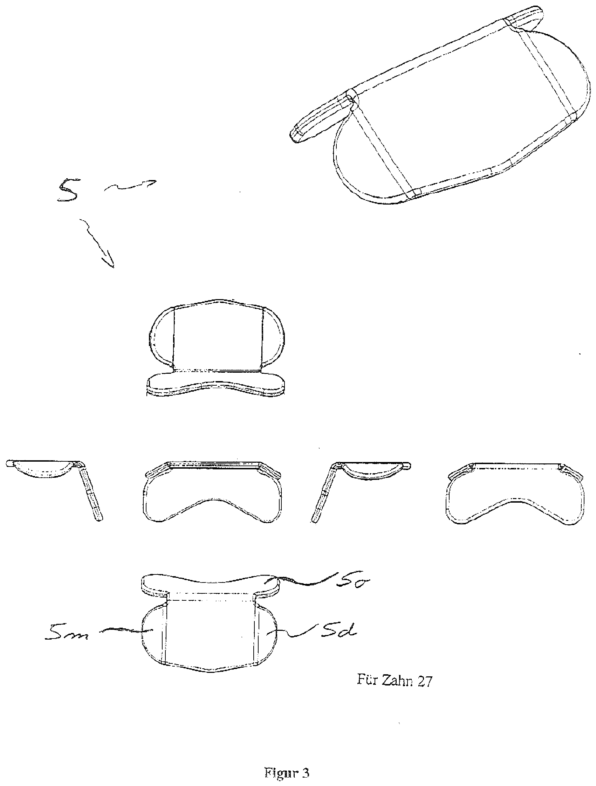

Figur 3 zeigt die sechs Seitenansichten sowie eine perspektivische Ansicht einer Rohauflage 5 für den Zahn 27. Die Rohauflage 5 wurde nach demselben Verfahren, wie unter Bezug auf die Fig. 1 und 2 beschrieben, hergestellt, jedoch wurden noch zwei weitere Biegeschritte durchgeführt. In einem ersten Biegeschritt wurden in einer Presse mit geeignetem Biegewerkzeug ein mesialer 5m und ein distaler 5d Flügelabschnitt durch Umbiegen gebildet. In einem zweiten Biegeschritt wurde in einer Presse mit geeignetem Biegewerkzeug ein okklusaler Abschnitt 5o der Rohauflage 5 gebildet. Dieser okklusale Abschnitt 5o liegt im eingesetzten Zustand beim Patienten okklusal auf dem Zahn 27 auf.

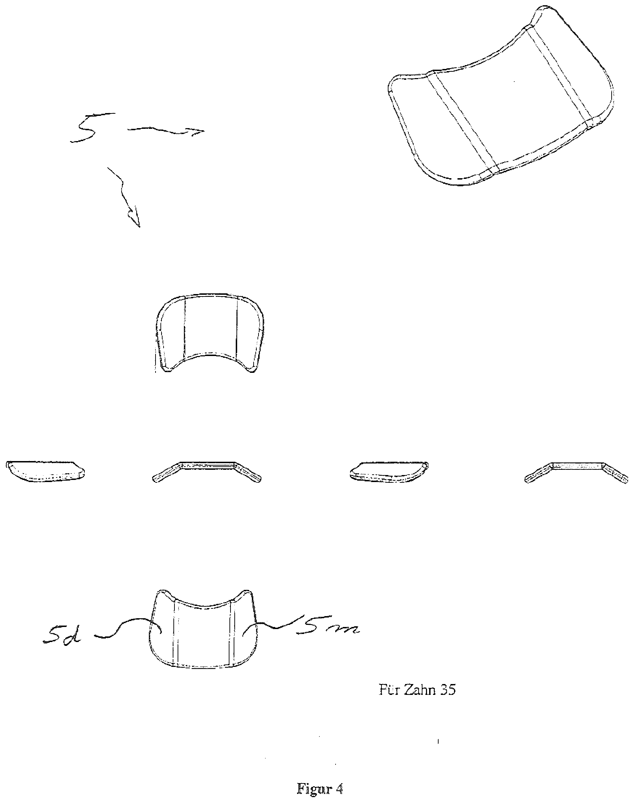

Figur 4 zeigt die sechs Seitenansichten sowie eine perspektivische Ansicht einer Rohauflage 5 für den Zahn 35. Die Rohauflage 5 wurde nach demselben Verfahren, wie unter Bezug auf die Fig. 1 und 2 beschrieben, hergestellt, jedoch wurden in einem weiteren Biegeschritt ein mesialer 5m und ein distaler 5d Flügelabschnitt gebildet.

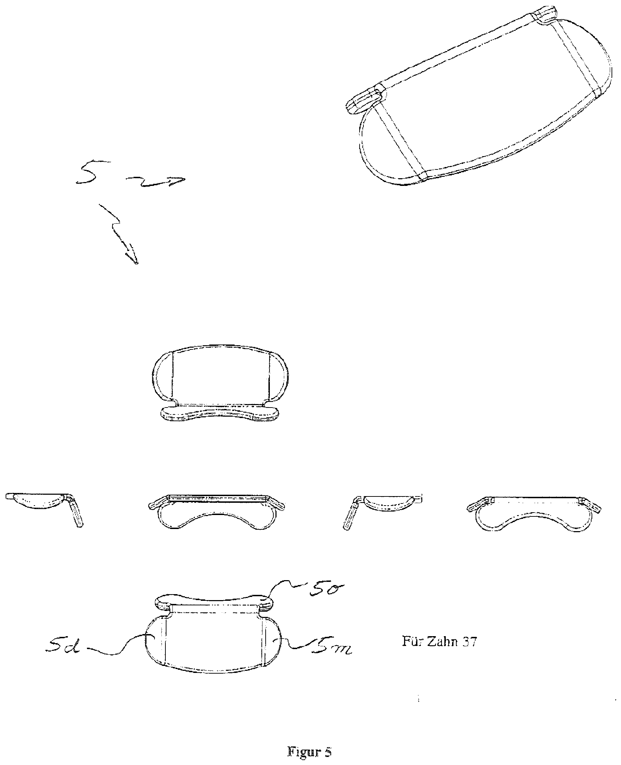

Figur 5 zeigt die sechs Seitenansichten sowie eine perspektivische Ansicht einer Rohauflage 5 für den Zahn 37. Die Rohauflage 5 wurde nach demselben Verfahren, wie unter Bezug auf die Fig. 1 und 2 beschrieben, hergestellt, jedoch wurden noch zwei weitere Biegeschritte durchgeführt, wie zuvor unter Bezug auf Fig. 3 beschrieben: In einem ersten Biegeschritt wurden in einer Presse mit geeignetem Biegewerkzeug ein mesialer 5m und ein distaler 5d Flügelabschnitt durch Umbiegen gebildet. In einem zweiten Biegeschritt wurde in einer Presse mit geeignetem Biegewerkzeug ein okklusaler Abschnitt 5o der Rohauflage 5 gebildet. Dieser okklusale Abschnitt 5o liegt im eingesetzten Zustand beim Patienten okklusal auf dem Zahn 37 auf.

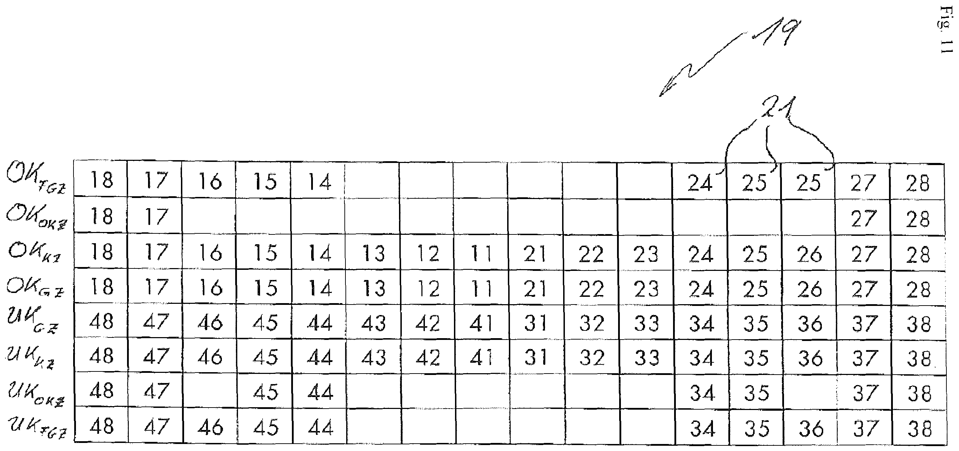

Die auf diese Weise hergestellten Rohauflagen 5 werden in eine Rohauflagenbibliothek 19 einsortiert, die in Fig. 11 dargestellt ist. Die Rohauflagenbibliothek 19 umfasst 16 mal 8 Rohauflagenbehälter 21, die matrixartig angeordnet sind. In der Reihe OK_{GZ} und UK_{GZ} sind jeweils 16 Rohauflagenbehälter 21, d.h. für jeden Zahn des Oberkiefers und des Unterkiefers ist ein Rohauflagenbehälter 21 vorgesehen. Die Rohauflagenbehälter 21 sind analog zu dem FDI-Zahnschema in der Zahnmedizin angeordnet: Von dem Zahn 8 (8er) links beginnend über die 1er nach rechts bis zu dem 8er der anderen Gesichtshälfte. Dementsprechend sind die Rohauflagenbehälter mit 18 über 11 und 21 bis 28 bezeichnet, respektive mit 48 über 41 und 31 bis 38. In jedem dieser Rohauflagenbehälter 21 befinden sich die zu dem jeweiligen Zahn gehörenden Rohauflagenbehälter 5.

In der Reihe OK_{GZ} und UK_{GZ} sind die Rohauflagen 5 für den Oberkiefer bzw. den Unterkiefer mit großen Zähnen. In der Reihe OK_{KZ} und UK_{KZ} sind die Rohauflagen 5 für den Oberkiefer bzw. den Unterkiefer mit kleinen Zähnen. In der Reihe OK_{OKZ} und UK_{OKZ} sind die Rohauflagen 5 mit okklusalen Abschnitten 5o für den Oberkiefer bzw. den Unterkiefer mit kleinen Zähnen, vorliegend nur für die Zähne 17, 18, 28, 27 sowie 34, 35, 37, 38, 44, 45, 47 und 48. In der Reihe OK_{FGZ} und UK_{FGZ} sind die Rohauflagen 5 mit Flügelabschnitten 5m, 5d für den Oberkiefer bzw. den Unterkiefer mit großen Zähnen, vorliegend nur für die Zähne 14, 15, 16, 17, 18, 24, 25, 26, 27, 28 sowie 34, 35, 36, 37, 38, 44, 45, 46, 47 und 48.

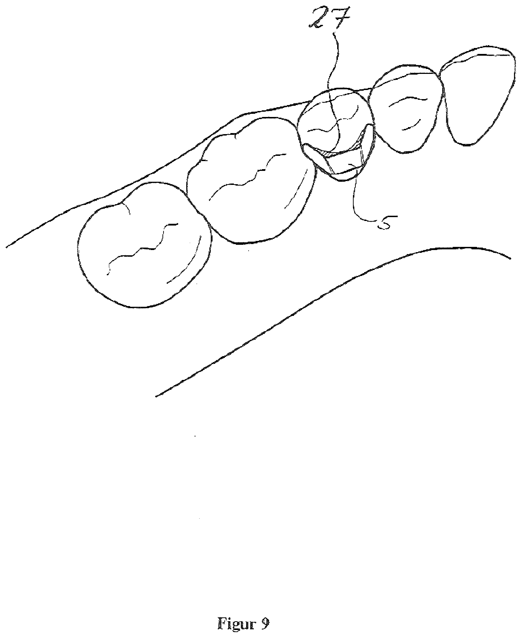

Um nun eine patientenspezifische Auflage herzustellen, wird wie folgt weiter verfahren: Von einem Oberkiefer und Unterkiefer eines Patienten wird jeweils ein Abdruck genommen und mit Hilfe desselben ein Gipsmodell erstellt. Die Gipsmodelle werden in einen Artikulator einartikuliert bzw. angeordnet, der die relative Lage der Kiefer zueinander widerspiegelt (Malokklusionsmodelle). Aus diesem Malokklusionsmodell wird das Ziel-Set-Up gefertigt, das die geplante Situation am Ende der Behandlung darstellt. Um dieses zu erstellen, werden die Zähne aus den Malokklusionsmodellen des Patienten einzeln ausgeschnitten und dann in der zu erreichenden Zielsituation wieder zusammengesetzt, wodurch das Ziel-Set-Up entsteht. Für die zu behandelnden Zähne wird nun jeweils eine geeignete Rohauflage 5 aus der Rohauflagenbibliothek 19 entnommen. Die entnommenen Rohauflagen 5 werden auf die zugehörigen Zähne des Gipsmodells (Ziel-Set-Up) evtl. noch von Hand weiter angepasst, wobei dabei die Form und/oder die Größe angepasst werden kann, aber auch noch Biegungen von Hand durchgeführt werden können. Anschließend werden die Rohauflagen 5 jeweils an den zugehörigen Zahn im Ziel-Set-Up gehalten und ein Spalt 27 zwischen dem Zahn und der Rohauflage 5 wird mit einem Füllmaterial aus Kunststoff verfüllt, wie in Fig. 9 gezeigt. Auf diese Weise erhält die Rohauflage 5 eine patientenspezifische Klebefläche 3K und wird dadurch zu einer Auflage 3. Diese patientenspezifische Klebefläche 3K ist zur Zahnoberfläche formschlüssig und kann später formschlüssig auf den Zahn des Patienten aufgesetzt werden und mit Hilfe eines Klebers fest mit diesem verbunden werden.

Die auf diese Weise hergestellten patientenspezifischen Auflagen 3 werden nun noch jeweils mit einem patientenspezifischen Bracketkörper 7 verbunden, der einer Bracketkörperbibliothek 23 entnommen wird, die analog zu der Rohauflagenbibliothek aufgebaut ist, wie folgend beschrieben.

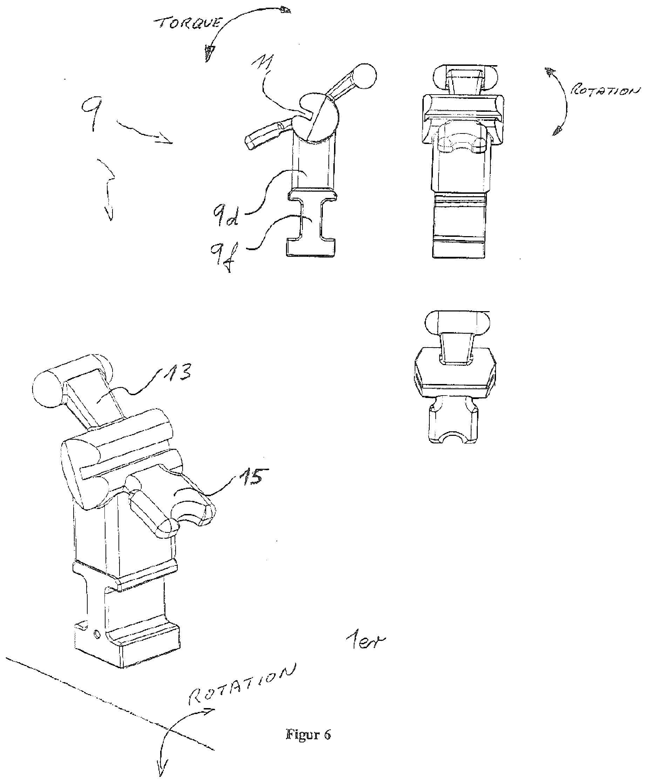

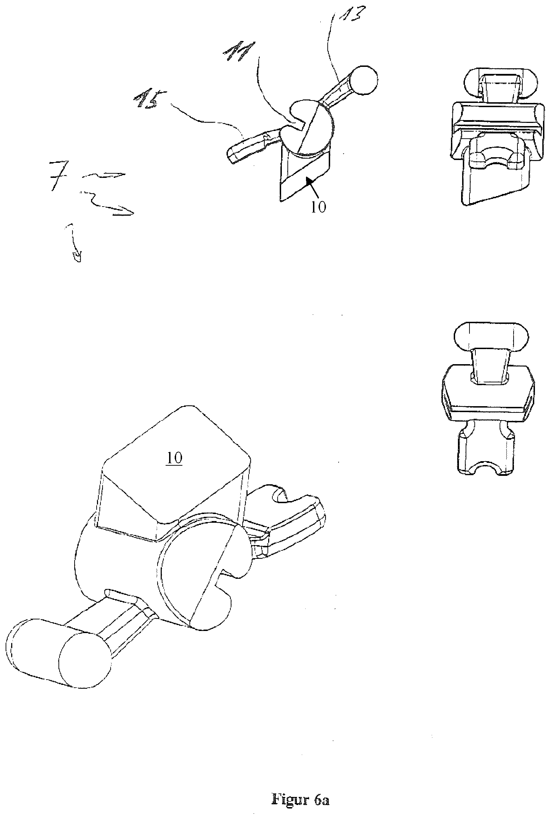

Fig. 6 zeigt verschiedene Ansichten eines Rohbracketkörpers 9 für einen OK 1er, wobei dieser einen Fixierabschnitt 9f, einen Distanzabschnitt 9d, einen Schlitz 11, einen Haken 13 und einen Flügel 15 aufweist. Figur 6a zeigt die Schnittfläche 10, die entsprechend der drei Parameter angeordnet ist.

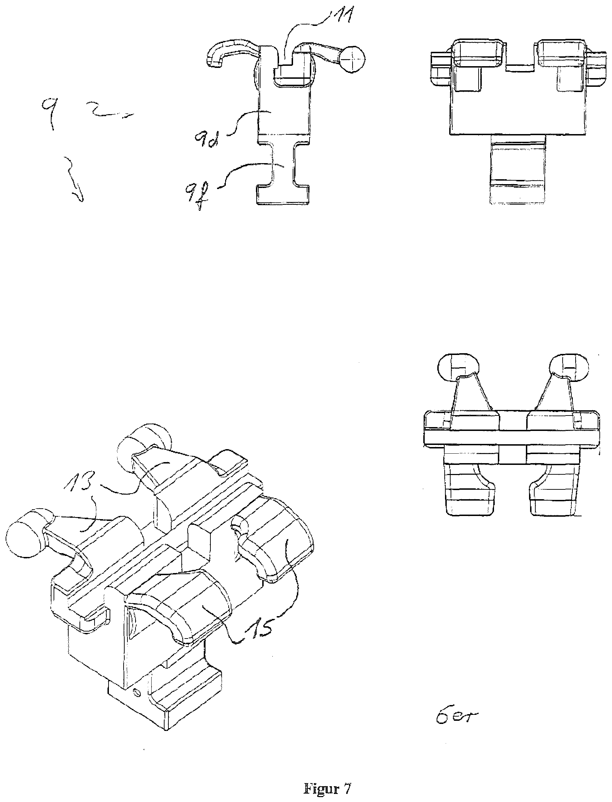

Fig. 7 zeigt verschiedene Ansichten eines Rohbracketkörpers 9 für einen OK oder UK 6er, wobei dieser einen Fixierabschnitt 9f, einen Distanzabschnitt 9d, einen Schlitz 11, zwei Haken 13 und zwei Flügel 15 aufweist.

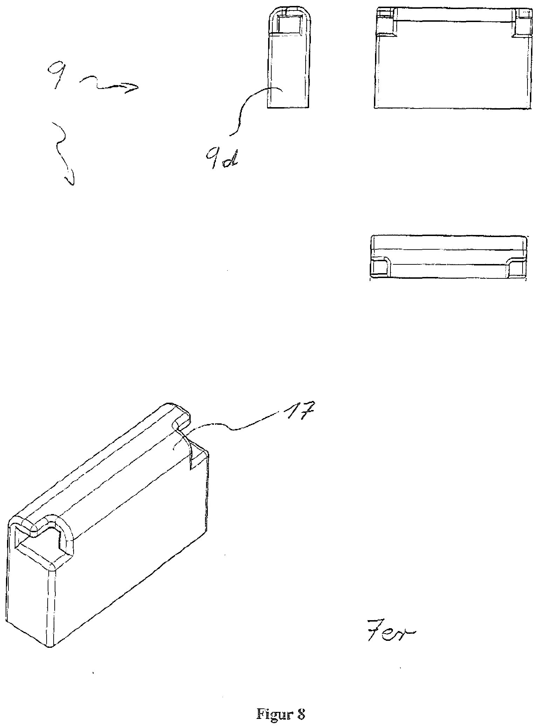

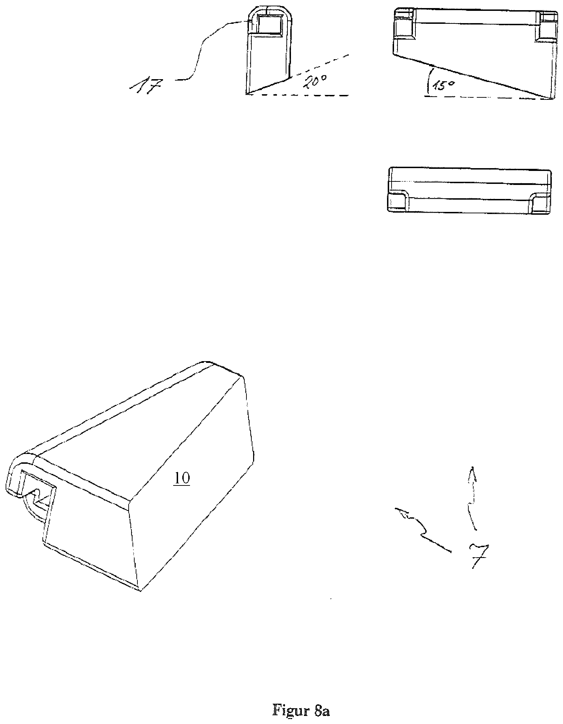

Fig. 8 zeigt verschiedene Ansichten eines Rohbracketkörpers 9 in Form eines Röhrchens (tube) 17 für einen OK oder UK 7er, wobei dieser ebenfalls einen Distanzabschnitt 9d aufweist.

Die Rohbracketkörper 9 wurden in einem MIM-Verfahren hergestellt (alternativ in einem Selective-Laser-Melting-Verfahren) und bestehen aus einer Kobalt-Chrom-Legierung (alternativ bspw. aus rostfreiem Stahl). Die Haken 13 und Flügel 15 weisen jeweils an ihrem dem Schlitz 11 zugewandten Ende eine Materialverjüngung auf, damit sie jeweils noch von Hand in eine geeignete Winkellage um den Schlitz 11 gebogen werden können. Um einen optimalen Schlitz 11 für die Behandlung zur Verfügung zu haben, werden die Rohbracketkörper 9 der Figuren 6 und 7 mit ihren Fixierabschnitten 9f an einem Träger befestigt. An dem Träger können ca. 100 Stück befestigt werden. Der Träger mit den Rohbracketkörpern 9 wird in ein geeignetes Flüssigkeitsbad getaucht, in dem der Schlitz 11 eines jeden Rohbracketkörpers 9 mit Hilfe eines Drahterosionsverfahrens nachgeschnitten wird. Dies kann auch über mehrere Durchläufe erfolgen (Schlichten). Auf diese Weise entsteht ein sehr präziser Schlitz 11 mit einer geringen Fehlertoleranz von der Norm.

Der Rohbracketkörper der Fig. 8 weist keinen Fixierabschnitt auf, weil er keinen Schlitz aufweist, der für die Behandlung hochpräzise gefertigt sein muss.

Nach diesem Schritt werden die Rohbracketkörper 9 der Figuren 6 bis 8 mit ihrem schlitzseitigen Ende in einer entsprechenden Negativform (zu diesem Ende) fixiert, wobei alternativ eine Fixierung am gegenüberliegenden Ende möglich ist. Mit Hilfe einer Säge wird der Distanzabschnitt 9d der jeweiligen Rohbracketkörper 9 unter verschiedenen Winkeln durchtrennt. Beim Durchtrennen können drei Parameter eingestellt werden:
Der erste Parameter ist ein Abstand der entstehenden Schnittfläche vom Schlitz 11. Je kleiner dieser Abstand gewählt werden kann, desto weniger spürt ein Patient das Bracket.

Der zweite Parameter ist ein Winkel um die Längsachse des Schlitzes 11 (mesio-distale-Achse). Je nach Abweichung des Schnittwinkels von einem durchschnittlichen Standardwert wird mehr oder weniger Torque aufgebracht, s. Fig. 6 zur Nomenklatur.

Der dritte Parameter ist ein Winkel um eine Senkrechte zur Längsachse des Rohbracketkörpers 9 (okklusale-gingivale-Achse). Je nach Abweichung des Schnittwinkels von einem durchschnittlichen Standardwert wird mehr oder weniger Rotation aufgebracht, s. Fig. 6 zur Nomenklatur.

Für einen Rohbracketkörper 9 werden nun diese drei Parameter festgelegt und der Distanzabschnitt 9d mit einer Säge entsprechend durchtrennt, wodurch sich ein Bracketkörper 7 ergibt. Fig. 6a zeigt den Rohbracketkörper 9 der Fig. 6, bei dem der Distanzabschnitt bzgl. Torque bei 55° und bzgl. Rotation bei 15° durchtrennt wurde, wodurch sich der Bracketkörper7 der Fig. 6a ergibt. Fig. 8a zeigt den Rohbracketkörper 9 der Fig. 8, bei dem der Distanzabschnitt bzgl. Torque bei 20° und bzgl. Rotation bei 15° durchtrennt wurde und dessen Schnittfläche 10, die entsprechend dieser drei Parameter angeordnet ist.

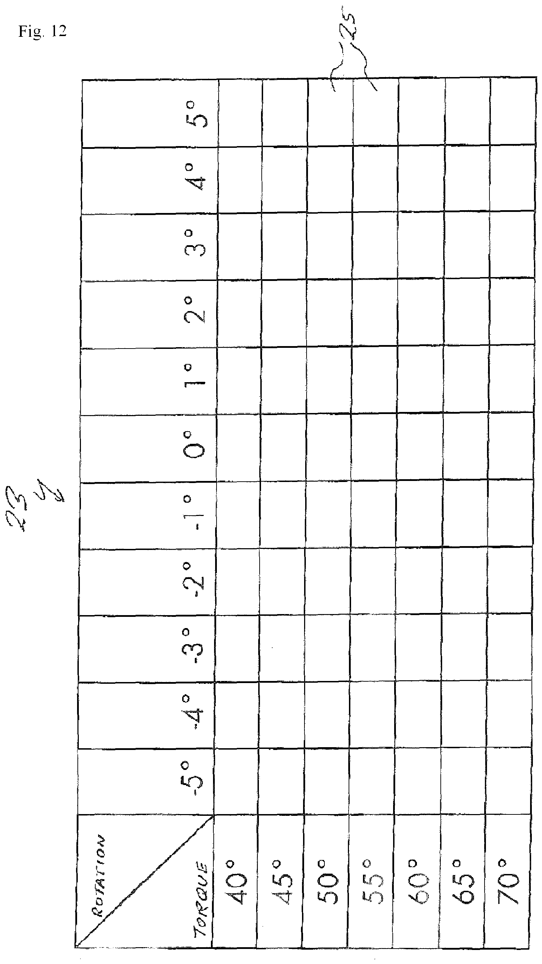

Die auf diese Weise erhaltenen Bracketkörper 7 werden in Bracketkörperbehälter 25 einer Bracketkörperbibliothek 23 einsortiert (Fig. 12), wobei für jeden Rohbracketkörper 9 der Figuren 6 bis 8 jeweils eine Bracketkörperbibliothek zur Verfügung steht. Mit anderen Worten hat der Rohbracketkörper 9 der Fig. 6 seine eigene Bracketkörperbibliothek, genauso wie der der Fig. 7 und 8.

Fig. 12 zeigt eine Bracketkörperbibliothek 23, die analog zu der Rohauflagenbibliothek aufgebaut ist und mit Bracketkörpern 7 gefüllt ist. Die Bracketkörper 7 sind bzgl. Rotation von -5° bis +5° in 1°-Schritten unterteilt und bzgl. Torque von 40° bis 70° in 5°-Schritten unterteilt. Natürlich können hier andere Intervallgrenzen sowie andere Intervallschritte verwendet werden, insbesondere auch in Abhängigkeit von dem Rohbracketkörper 9, d.h. für den Rohbracketkörper 9 der Fig. 6 können andere Intervallgrenzen und andere Intervallschritte verwendet werden als für den der Fig. 7. Die Bracketkörper 7 bilden zusammen mit der Auflage 3 ein fertiges Bracket 1.

Das Verfahren zur Fertigung eines patientenspezifischen Brackets wird wie folgt fortgesetzt: An den zu behandelnden Zähnen im Set-Up ist bereits eine patientenspezifisches Auflage 3 befestigt. Für jede Auflage 3 wird nun aus der Bracketkörperbibliothek 23 ein geeigneter Bracketkörper 7 entnommen und an seiner jeweiligen Auflage 3 festgeklebt. Vorteilhaft werden die Bracketkörper 7 über einen "mechanischen Finger" an die jeweilige Auflage 3 geführt und dann festgeklebt.

Von dem auf diese Weise fertig gestellten Bracket-Set-Up wird nun ein 2dim-Scan des OK- und/oder UK-Modells aus der entsprechenden cranialen bzw. caudalen Richtung (Draufsicht) vorgenommen, um an Hand dieser Daten einen entsprechenden Drahtbogen mit Hilfe einer Drahtbiegemaschine zu biegen.

Anschließend werden die Gipsmodelle in einem Wasserbad gewässert, wodurch die Brackets mit den daran festgeklebten Bracketkörpern gelöst werden, die folgend mit Hilfe eines Lasers aneinander fest geschweißt werden.

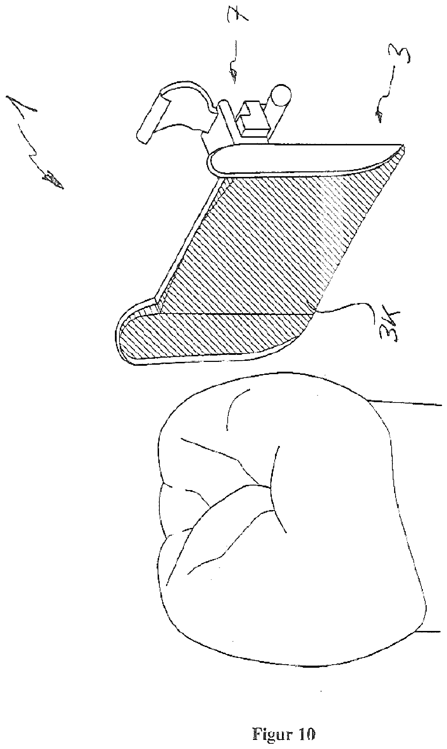

Die auf diese Weise hergestellten Brackets 1 werden auf ein Gipsmodell des Patienten (Malokklusionsmodell) gesetzt, s. Fig. 10, und dort fixiert, um ein Übertragungstablett, z.B. aus Silikon, herzustellen.

Für die Zähne 21, 23, 27, 35 und 37 wurde in den Figuren 1 bis 5 jeweils eine Rohauflage 5 vorgestellt. Allgemein ist es möglich, für jeden Zahn des Ober- und/oder Unterkiefers jeweils eine speziell auf diesen Zahn angepasste Rohauflage 5 zu entwickeln. Alternativ ist es möglich, eine Rohauflage 5 für mehrere Zähne zu verwenden, bspw. eine Rohauflage 5 für die Zähne 32, 31, 41 und 42 zu verwenden.

Die Rohauflagenbibliothek 19 gemäß Fig. 11 umfasst in jeder Reihe 16 Rohauflagenbehälter 21, in denen jeweils für einen Zahn Rohauflagen 5 angeordnet sind. Es sind somit vom 8er der einen Seite bis zum 8er der anderen Seite jeweils Rohauflagen 5 vorgesehen. Die Rohauflagenbibliothek 19 umfasst in einer alternativen Ausführungsform in jeder Reihe 14 Rohauflagenbehälter 21, in denen jeweils für einen Zahn (vom 7er bis zum 7er) Rohauflagen 5 angeordnet sind. Es sind somit vom 7er der einen Seite bis zum 7er der anderen Seite jeweils Rohauflagen 5 vorgesehen.

Im Rahmen der vorliegenden Erfindung wird unter einer matrixartigen Anordnung eine Anordnung in Zeilen und Spalten verstanden.

Die Bracketkörperbibliothek 23 umfasst Bracketkörperbehälter 25 mit darin angeordneten Bracketkörpern 7. Die Bracketkörperbehälter 25 bzw. die darin angeordneten Bracketkörper 7 sind dabei nach Parameterwerten der drei Parameter (Abstand Schnittfläche - Schlitz, Winkel mesiale-distale-Achse, Winkel okklusale-gingivale-Achse) sortiert. Allgemein ist es möglich, in einer Bracketkörperbibliothek 23 eines Bracketkörpers 9 alle drei Parameter zu variieren. So ist es bspw. möglich, die Bracketkörperbibliothek 23 der Fig. 12 mit den gleichen Werten für Torque und Rotation erneut herzustellen, wobei jedoch der dritte Parameter (der Abstand Schnittfläche - Schlitz) variiert ist, bspw. um 1mm vergrößert oder verkleinert. Auf diese Weise gäbe es die Bracketkörperbibliothek 23 der Fig. 12 zweimal: einmal mit einem größeren Abstand und einmal mit einem kleineren Abstand, wodurch eine neue Bracketkörperbibliothek 23 gebildet ist. Die matrixartige Anordnung der Fig. 12 wird somit in die dritte Dimension erweitert, in der der weitere Parameter variiert ist. Diese allgemeine Version ist in der Praxis in der Regel nicht notwendig: Da der Abstand Schnittfläche - Schlitz immer so gering wie möglich sein soll, damit das entstehende Bracket 1 den Patienten so wenig wie möglich stört, kann die Bracketkörperbibliothek 23 der Fig. 12 ausreichend sein, bei der der Abstand Schnittfläche - Schlitz so gering wie möglich ist.

Ein Verfahren zur Herstellung patientenspezifischer Auflagen 3 umfasst allgemein vorteilhaft folgende Schritte:
a) Bereitstellen eines vorzugsweise ebenen Auflagenmaterialabschnitts,
b) Bereitstellen einer Stanze mit mindestens einem Stanzstempel zum Ausstanzen mindestens einer Rohauflage 5 aus dem Auflagenmaterialabschnitt,
c) Ausstanzen mindestens einer Rohauflage 5 aus dem Auflagenmaterialabschnitt mit Hilfe der Stanze,
d) Herstellen eines patientenspezifischen Set-Ups, insbesondere aus Gips, von zu behandelnden Zähnen eines Oberkiefers und/oder eines Unterkiefers eines Patienten,
e) Auswählen einer Rohauflagen 5 für einen zu behandelnden Zahn des Patienten und
f) Verfüllen eines Spalts 27 zwischen der Rohauflage 5 und dem zugehörigen Zahn im Set-Up mit einem Füllmaterial, insbesondere aus Kunststoff, um eine zahnspezifische Klebefläche 3K für die Auflage 3 herzustellen, die einen Formschluss mit dem klinischen Zahn des Patienten ermöglicht.

Dabei werden vorteilhaft im Schritt c) mehrere Rohauflagen 5 aus dem Auflagenmaterialabschnitt ausgestanzt, insbesondere gleiche oder verschiedene.

Bevorzugt wird für alle Zähne eines Oberkiefers und/oder eines Unterkiefers jeweils eine Rohauflage 5 ausgestanzt.

Mit Vorteil erfolgt ein Vorkonfektionieren der mindestens einen Rohauflage 5 an einen bestimmten Zahn nach dem Schritt c), bspw. in mindestens einem folgenden Prägeschritt, insbesondere erfolgt ein Vorkonfektionieren an einen jeweiligen Zahn eines Oberkiefers und/oder eines Unterkiefers.

Das Vorkonfektionieren kann ein Anpassen der bukkalen/lingualen Umfangskontur 5U der mindestens einen Rohauflage 5 umfassen, um diese Umfangskontur 5U der Rohauflage 5 an eine bestimmte Zahngröße oder -form anzupassen.

Das Vorkonfektionieren kann auch ein Umbiegen von ausgewählten Abschnitten einer Rohauflage 5 umfassen, insbesondere das Umbiegen von mesialen und/oder distalen Abschnitten einer Rohauflage 5, um mesiale und/oder distale Flügelabschnitte 5m, 5d der Rohauflage 5 zu bilden, die den zugehörigen Zahn mindestens abschnittsweise umgreifen.

Das Vorkonfektionieren kann ferner ein Umbiegen eines okklusalen Abschnitts einer Rohauflage 5 umfassen, der folgend auf dem zugehörigen Zahn okklusal aufliegt.

Das Vorkonfektionieren kann ebenfalls das Ausbilden von lingualen/bukkalen Protrusionen bei mindestens einer Rohauflage 5 umfassen, um es bspw. an eine linguale konkave/konvexe Struktur eines bestimmten Zahns anzupassen.

Im Schritt a) wird mit Vorteil ein Auflagenmaterialabschnitt aus einem biokompatiblen Metall oder einer biokompatiblen Legierung, insbesondere Titan, Gold, Silber oder rostfreiem Stahl oder einer Kobalt-Chrom-Legierung, bereitgestellt.

Zusätzlich kann ein manuelles Anpassen der im Schritt e) ausgewählten Rohauflage 5 an seinen zugehörigen Zahn erfolgen, wobei das Anpassen ein Anpassen der Form und/oder der Größe der Rohauflage umfassen kann.

Die Rohauflagenbibliothek 19 umfasst allgemein in einer Basisvariante eine Reihe von mindestens 14, vorteilhaft 16, Rohauflagenbehältern 21 enthaltend jeweils Rohauflagen 5 für einen Zahn eines Oberkiefers sowie eine weitere Reihe von mindestens 14, vorteilhaft 16, Rohauflagenbehältern 21 enthaltend jeweils Rohauflagen 5 für einen Zahn eines Unterkiefers.

Die Rohauflagenbibliothek 19 umfasst vorteilhaft für mindestens einen Zahn mindestens einen weiteren Rohauflagenbehälter 21, in dem bspw. Rohauflagen 5 einer weiteren Größe und/oder mit Flügelabschnitten 5m, 5d und/oder mit halben okklusalen Abschnitten 5o angeordnet sind.

Bevorzugt sind die Rohauflagenbehälter 21 in der Rohauflagenbibliothek 19 matrixartig angeordnet, insbesondere vergleichbar mit einem FDI-Zahnschema.

Ein vorteilhaftes Verfahren zur Herstellung eines patientenspezifischen Brackets mit einer patientenspezifischen Auflage und einem patientenspezifischen Bracketkörper kann somit in folgende Schritte unterteilt werden:
1. Herstellung einer Rohauflagenbibliothek:
   - Bereitstellen eines vorzugsweise ebenen Auflagenmaterialabschnitts,
   - Bereitstellen einer Stanze mit mindestens einem Stanzstempel zum Ausstanzen von zahnspezifischen Rohauflagen aus dem Auflagenmaterialabschnitt,
   - Ausstanzen der zahnspezifischen Rohauflagen aus dem Auflagenmaterialabschnitt mit Hilfe der Stanze,
   - optionales Vorkonfektionieren der Rohauflagen.
2. Herstellung einer Bracketkörperbibliothek:
   - Bereitstellen von Bracketkörpern mit einem Distanzabschnitt,
   - ggfls. Fertigen von hochpräzisen Schlitzen in den Rohbracketkörpern (bspw. mit Drahterosion),
   - Durchteilen der Distanzabschnitte mit ausgewählten Parameterwerten für die drei Parameter
3. Erstellen eines patientenspezifischen Ziel-Set-Ups, insbesondere aus Gips, vom zu behandelnden Oberkiefer und/oder Unterkiefer eines Patienten.
4. Auswählen einer Rohauflage aus der Rohauflagenbibliothek für einen zu behandelnden Zahn des Patienten.
5. Verfüllen eines Spalts zwischen der Rohauflage und dem zugehörigen Zahn im Ziel-Set-Up mit einem Füllmaterial, insbesondere aus Kunststoff, um eine zahnspezifische Klebefläche für die Auflage herzustellen, die einen Formschluss mit dem klinischen Zahn des Patienten ermöglicht.
6. Auswählen eines Bracketkörpers aus der Bracketkörperbibliothek für jede Auflage.
7. Fixieren des Bracketkörpers an der Auflage, um das patientenspezifische Bracket zu bilden.

Die Verfahrensschritte müssen jedoch nicht in dieser Reihenfolge durchgeführt werden. So ist es bspw. möglich, alternativ zunächst die Rohauflagen 5 mit ihren zugehörigen Bracketkörpern 7 zu verbinden und erst anschließend die Klebefläche 3K zu bilden.

### Bezugszeichenliste

- 1: Bracket
- 3: Auflage
- 3K: Klebefläche der Auflage
- 5: Rohauflage
- 5m: Mesialer (Flügel-) Abschnitt einer Rohauflage
- 5d: Distaler (Flügel-) Abschnitt einer Rohauflage
- 5o: Okklusaler Abschnitt einer Rohauflage
- 5U: bukkale/linguale Umfangskontur
- 7: Bracketkörper
- 9: Rohbracketkörper
- 9d: Distanzabschnitt des Rohbracketkörpers
- 9f: Fixierabschnitt des Rohbracketkörpers
- 10: Schnittfläche
- 11: Schlitz
- 13: Haken
- 15: Flügel
- 17: Röhrchen
- 19: Rohauflagenbibliothek
- 21: Rohauflagenbehälter
- 23: Bracketkörperbibliothek
- 25: Bracketkörperbehälter
- 27: Spalt

## Patentansprüche

1. Verfahren zur Herstellung eines patientenspezifischen Bracketkörpers (7) für ein modular aufgebautes Bracket (1) mit einer Auflage (3) und einem Bracketkörper (7), das die Schritte umfasst:
a) Bereitstellen eines Rohbracketkörpers (9) mit einem Distanzabschnitt (9d),
b) Festlegen eines ersten Parameters zum Durchtrennen des Distanzabschnitts (9d), einem Abstand einer entstehenden Schnittfläche des Distanzabschnitts (9d) vom Schlitz (11), um eine geeignete Höhe des Bracketkörpers (7) festzulegen,
c) Festlegen eines zweiten Parameters zum Durchtrennen des Distanzabschnitts (9d), einem Schneidwinkel zu einer mesio-distalen-Achse, um einen geeigneten Torquewert des Bracketkörpers (7) festzulegen,
d) Festlegen eines dritten Parameters zum Durchtrennen des Distanzabschnitts (9d), einem Schneidwinkel zu einer okklusal-gingivalen-Achse, um einen geeigneten Rotationswert des Bracketkörpers (7) festzulegen,
e) Durchtrennen des Distanzabschnitts (9d) entsprechend der drei festgelegten Parameter, wodurch ein Bracketkörper (7) hergestellt ist.

2. Verfahren nach Anspruch 1, **dadurch gekennzeichnet, dass** der Bracketkörper (9) im Schritt a) durch ein MIM- oder ein selektives Laserschmelzverfahren bereitgestellt wird und/oder dass er aus einem biokompatiblen Metall oder einer biokompatiblen Legierung, insbesondere Titan, Gold, Silber, rostfreier Stahl oder einer Kobalt-Chrom-Legierung, hergestellt wird.

3. Verfahren nach Anspruch 1 oder 2, **dadurch gekennzeichnet, dass** das Durchtrennen im Schritt e) mit Hilfe einer Säge erfolgt.

4. Verfahren nach einem der vorangehenden Ansprüche, **dadurch gekennzeichnet, dass** das Festlegen der Parameter in den Schritten b) bis d) individuell für einen Patienten erfolgt.

5. Verfahren nach einem der Ansprüche 1 bis 3, **dadurch gekennzeichnet, dass** die Parameter in den Schritten b) bis d) jeweils in einem vorbestimmten Intervall mit vorbestimmten Intervallschritten variiert werden, um eine Bracketkörperbibliothek (23) zu erstellen, in der Bracketkörper (7) mit den jeweiligen verschiedenen Parameterwerten angeordnet sind.

6. Verfahren nach einem der vorangehenden Ansprüche, **dadurch gekennzeichnet, dass** für jeden zu behandelnden Zahn eines Patienten eine Auflage (3) zur Verbindung mit einem Bracketkörper (7) bereitgestellt wird.

7. Verfahren nach Anspruch 6, **dadurch gekennzeichnet, dass** jede Auflage (3) mit einem Bracketkörper (7) verbunden wird, insbesondere mittels Kleben oder Schweißen, um für jeden zu behandelnden Zahn eines Patienten ein Bracket (1) herzustellen.

8. Verfahren nach Anspruch 7, **dadurch gekennzeichnet, dass** die Brackets (1) in einem Malokklusionsmodell des Patienten jeweils auf ihrem zugehörigen, zu behandelnden Zahn positioniert werden und dann ein Übertragungstablett hergestellt wird.

## Claims

1. Method for producing a patient-specific bracket body (7) for a modular bracket (1) having a pad (3) and a bracket body (7), which comprises the steps:
a) providing a raw bracket body (9) having a spacer section (9d),
b) establishing a first parameter for cutting through the spacer section (9d), a distance of a resulting cut surface of the spacer section (9d) from the slot (11), in order to establish a suitable height of the bracket body (7),
c) establishing a second parameter for cutting through the spacer section (9d), a cutting angle to a mesio-distal axis, in order to establish a suitable torque value of the bracket body (7),
d) establishing a third parameter for cutting through the spacer section (9d), a cutting angle to an occlusal-gingival axis, in order to establish a suitable rotation value of the bracket body (7),
e) cutting through the spacer section (9d) according to the three established parameters, whereby a bracket body (7) is produced.

2. Method according to claim 1, **characterised in that** the bracket body (9) is prepared in step a) via a MIM or a selective laser melting process and/or that it is produced from a biocompatible metal or a biocompatible alloy, in particular titanium, gold, silver, stainless steel or a cobalt-chrome alloy.

3. Method according to claim 1 or 2, **characterised in that** the cutting through in step e) is done using a saw.

4. Method according to any of the preceding claims, **characterised in that** the parameters in steps b) to d) are established individually for a given patient.

5. Method according to one of the claims 1 to 3, **characterized in that** the parameters in steps b) to d) are respectively varied in a preset interval with preset interval steps, to generate a bracket body library (23) in which bracket bodies (7) are arranged with the respective different parameter values.

6. Method according to any of the preceding claims, **characterised in that** for every tooth of a patient to be treated a pad (3) for connection with a bracket body (7) is provided.

7. Method according to claim 6, **characterised in that** each pad (3) is connected to a bracket body (7), in particular by gluing or welding, to produce a bracket (1) for every tooth of a patient to be treated.

8. Method according to claim 7, **characterised in that** the brackets (1) in a malocclusion model of the patient are respectively positioned on their matching teeth to be treated and a transfer tray is then produced.

## Revendications

1. Procédé de fabrication d'un corps de bague (7) spécifique au patient pour une bague orthodontique (1) de structure modulaire, comprenant un élément d'appui (3) et un corps de bague (7), procédé comprenant les étapes suivantes:
a) fourniture d'un élément d'appui brut (9) muni d'une pièce d'écartement (9d),
b) définir un premier paramètre pour couper la pièce d'écartement (9d), à une distance d'une surface de coupe résultante de la pièce d'écartement (9d) de la fente (11) afin de déterminer une hauteur appropriée du corps de bague (7),
c) définir un deuxième paramètre pour couper de la pièce d'écartement (9d), à un angle de coupe par rapport à un axe mésio-distal, pour déterminer un couple approprié du corps de bague (7),
d) définir un troisième paramètre pour couper de la pièce d'écartement (9d), à un angle de coupe par rapport à un axe occlusal-gingival, pour déterminer une valeur de rotation appropriée du corps de bague (7),
e) découper la pièce d'écartement (9d) en fonction des trois paramètres spécifiés, pour ainsi obtenir un corps de bague (7).

2. Procédé selon la revendication 1, **caractérisé en ce que** le corps de bague (9) de l'étape a) est obtenu grâce à un procédé MIM ou de fusion sélective au laser et/ou qu'il est constitué d'un métal biocompatible ou d'un alliage biocompatible, en particulier le titane, l'or, l'argent, l'acier inoxydable ou un alliage cobalt-chrome.

3. Procédé selon les revendications 1 ou 2, **caractérisé en ce que** la découpe à l'étape e) s'effectue à l'aide d'une scie.

4. Procédé selon l'une des revendications précédentes, **caractérisé en ce que** les paramètres dans les étapes b) à d) sont définis individuellement pour chaque patient.

5. Procédé selon l'une des revendications 1 à 3, **caractérisé en ce que** les paramètres dans les étapes b) à d) varient chacun avec un intervalle prédéterminé selon des pas d'intervalle prédéterminés et ce, pour créer une bibliothèque de corps de bague (23) contenant le corps de bague (7) avec les différentes valeurs de paramètres respectives.

6. Procédé selon l'une quelconque des revendications précédentes, **caractérisé en ce que** l'on produit, pour chaque dent à traiter d'un patient, un élément d'appui (3) en conjonction avec le corps de bague (7).

7. Procédé selon la revendication 6, **caractérisé en ce que** chaque élément d'appui (3) est fixé à un corps de bague (7), notamment par collage ou soudage, pour obtenir une bague (1) pour chaque dent à traiter d'un patient.

8. Procédé selon la revendication 7, **caractérisé en ce que** les bagues (1) dans un modèle de malocclusion du patient sont posées respectivement sur la dent à traiter, avant de produire un plateau de transfert.
